# EUROPEAN PATENT SPECIFICATION

(11) **EP 1 647 572 B1**
(45) Date of publication and mention of the grant of the patent: **05.12.2007**
(21) Application number: 05019813.4
(22) Date of filing: 12.09.2005
(51) Int. Cl.: C08L 9/00, C08L 21/00, B60C 1/00

(54) **Rubber composition for tire and tire comprising the same**
Kautschukzusammensetzung für Reifen und Luftreifen, der diese enthält
Composition de caoutchouc pour pneumatique et pneumatique contenant le même

(30) Priority: 14.10.2004 JP 2004300356
(43) Date of publication of application: 19.04.2006
(73) Proprietor: Sumitomo Rubber Industries Ltd, Kobe-shi, Hyogo-ken (JP)
(72) Inventor: Nishioka, Kazuyuki, Chuo-ku Kobe-shi Hyogo-ken (JP)
(74) Representative: Manitz, Finsterwald & Partner GbR

(56) References cited:
- EP-A- 0 117 834
- EP-A- 0 328 284
- GB-A- 1 120 572
- PATENT ABSTRACTS OF JAPAN vol. 005, no. 180 (C-079), 19 November 1981 (1981-11-19) & JP 56 103232 A (TOYO TIRE & RUBBER CO LTD), 18 August 1981 (1981-08-18)

## Description

The present invention relates to tire comprising a rubber composition comprising a polystyrene having a specific molecular weight.

In general, a tread rubber for a high performance tire is required to satisfy both of high grip performance and abrasion resistance. Conventionally, in order to obtain a rubber composition showing high grip performance, a rubber composition using a styrene-butadiene copolymer rubber (SBR) with a high glass transition temperature (Tg), a rubber composition compounded with a resin of a high softening point and a process oil in an equal amount of thereof, a rubber composition highly filled with a softening agent and carbon black, and a rubber composition using carbon black with a small particle diameter, is used.

However, there is a problem that a rubber composition using SBR with high Tg has great temperature dependency, and the variation in performance for temperature change becomes great. Further, in case that a process oil is substituted with an equal amount of a resin with a high softening point, temperature dependency is great caused by the influence of the resin with a high softening point if a replacement amount is much. Further, in case that carbon black of a small particle and a great amount of a softening agent are used, there is a problem that dispersibility of carbon black is poor and abrasion resistance is lowered.

To improve this point, using a low molecular weight styrene-butadiene copolymer is proposed in the Japanese Unexamined Patent Publication No.63-101440. However, since a double bond having crosslinking property exists in the low molecular weight styrene-butadiene copolymer, there is a problem that a portion of a low molecular weight component forms crosslinking with the rubber of the matrix to be taken into the matrix and sufficient hysteresis loss is not generated. Also, in case that a portion of a double bond component is converted to a saturation bond by hydrogenation so that the low molecular weight component is not taken into the matrix by crosslinking, compatibility with the matrix is significantly deteriorated. As a result, there are problems that fracture properties are lowered and the low molecular weight component bleeds out.

GB 1,120,572 discloses a polybutadiene rubber composition comprising a polybutadiene rubber comprising molecules with a cis-1,4-structure and molecules with a 1,2-structure and 1 to 20 % by weight of a polymer having a mean molecular weight of from 200 to 5,000 being selected from homopolymers or copolymers of alpha-olefins.

JP 56-103,232 discloses a rubber composition comprising natural or synthetic rubber, carbon black and 1 to 50 parts by weight of polystyrene having a molecular weight between 300 and 5,000 and a softening point of between 5 and 150°C.

EP 0 328 284 A1 discloses a rubber composition comprising a styrene-diene copolymer rubber having a content of bound styrene between 10 and 65 % by weight and a low molecular weight polymer having a weight average molecular weight between 5,000 and 200,000.

EP 0 117 834 A1 describes a pneumatic tire having a sulfur vulcanized rubber tread composition containing a dispersion of about 2 to about 15 phr of a particulate polystyrene resin having a softening point in the range of about 90°C to about 120°C.

It is the object of the present invention to provide a tire comprising a rubber composition improving abrasion resistance and grip performance with a high level balance.

The present invention relates to a tire comprising a rubber composition comprising 5 to 150 parts by weight of polystyrene having a weight average molecular weight of 500 to 10000 based on 100 parts by weight of a styrene - butadiene rubber.

The rubber composition for a tire of the present invention comprises a styrene - butadiene rubber and polystyrene.

The amount of styrene in SBR is preferably at least 20 % by weight in a diene rubber from the viewpoint of compatibility with polystyrene and more preferably at least 25 % by weight. When the amount of styrene is less than 20 % by weight, the abrasion resistance tends to be lowered. Also, the amount of styrene is preferably at most 60 % by weight and more preferably at most 50 % by weight. When the amount of styrene exceeds 60 % by weight, not only the abrasion resistance is lowered, but also grip performance at a low temperature tends to be deteriorated.

According to the present invention, the content rate of SBR is 100 % by weight.

The rubber composition of the tire of the present invention can improve abrasion resistance and grip performance With a high level balance by containing polystyrene. Further, in case of compounding a polymer compound such as polyethylene and polypropylene in place of polystyrene, it is not preferable since there are problems that compatibility with a styrene-butadiene rubber is not excellent and lowering abrasion resistance is occurred.

Weight average molecular weight (Mw) of polystyrene is at least 500 and preferably at least 800. When Mw is less than 500, the abrasion resistance is lowered. Further, Mw is at most 10000, preferably at most 5000, more preferably at most 3000 and further preferably at most 2000. When Mw exceeds 10000, effects of improvement in grip performance, particularly, grip performance at a low temperature can not be obtained.

The glass transition temperature (Tg) of polystyrene is preferably at most 80°C and more preferably at most 70°C. When the Tg of polystyrene exceeds 80°C, grip performance, in particular, at a low temperature tends to be deteriorated.

The amount of polystyrene is at least 5 parts by weight based on 100 parts by weight of the styrene-butadiene rubber and preferably at least 10 parts by weight. When the amount of polystyrene is less than 5 parts by weight, effects of improvement in grip performance, in particular, is hardly obtained. Also, the amount of polystyrene is at most 150 parts by weight based on 100 parts by weight of the styrene-butadiene rubber and preferably at most 100 parts by weight. When the amount of polystyrene exceeds 150 parts by weight, abrasion resistance is lowered.

The rubber composition of the tire of the present invention preferably contains a filler for reinforcement. The filler for reinforcement can be used by selecting arbitrarily from ones used in a rubber composition for a tire which is commonly used conventionally, but mainly, carbon black is preferable. Those fillers for reinforcement may be used solely or in a combination use of at least two kinds.

The nitrogen adsorbing-specific surface (N₂SA) of carbon black is preferably at least 80 m²/g and more preferably at least 100 m²/g. When N₂SA is less than 80 m²/g, both of grip performance and abrasion resistance tend to be lowered. Also, N₂SA of carbon black is preferably at most 280 m²/g and more preferably at most 200 m²/g. When N₂SA exceeds 280 m²/g, excellent dispersion is hardly obtained and the abrasion resistance tends to be lowered.

The amount of carbon black is preferably at least 10 parts by weight based on 100 parts by weight of the styrene-butadiene rubber and more preferably at least 20 parts by weight. When the amount of carbon black is less than 10 parts by weight, abrasion resistance tends to be lowered. Also, the amount of carbon black is preferably at most 200 parts by weight based on 100 parts by weight of the styrene-butadiene rubber and more preferably at most 150 parts by weight. When it exceeds 200 parts by weight, processability tends to be lowered.

Further, in the rubber composition of the tire of the present invention, various chemicals usually used in rubber industries, other than the above mentioned components, for example, a curing agent such as sulfur, an additive such as various vulcanization accelerators, various softening agents, various aging preventive agents, stearic acid, an antioxidant and an ozone degradation preventive agents can be compounded.

The tire of the present invention is prepared by a usual process using the aforementioned rubber composition Namely, the rubber composition of the tire of the present invention, in which the above described various chemicals are compounded, if necessary, is processed with extrusion, adjusting in a form of each part of a tire in a step of being uncured, and an uncured tire is formed by molding on a tire molding machine by a usual process. The tire is obtained by adding heat and pressure to the uncured tire in a vulcanizer.

Since the rubber composition of the tire of the present invention can improve high grip performance significantly, it is preferably used as a tire part such as, particularly, a tread of a high performance tire among tire parts.

### EXAMPLES

Hereinafter, the present invention is explained in detail in Examples and Comparative Examples, but it is needless to say that the technical scope of the present invention is not limited thereto.

### (Polymerization of polystyrene)

A 50 ml container replaced with nitrogen sufficiently, was charged with 15 ml of toluene, 5 ml of styrene and 0.28 g of n-butyllithium, and after polymerizing for one hour at 0°C, polystyrene 1 was synthesized by terminating the reaction by charging a methanol-hydrochloric acid (2 %) solution. Also, polystyrene 2 to 5 were synthesized by the same prescription, changing an amount of chemicals, a reaction temperature, and reaction time respectively.

Weight average molecular weights (Mw) of the synthesized polystyrene 1 to 5 were measured by using a device of GPC-8000 series made by Tosoh Corporation and a differential refractometer as a detector, and molecular weight was calibrated by standard polystyrene. Further, glass transition temperature thereof were measured by DSC.

Evaluation results of polystyrene 1 to 5 are shown in Table 1.

**TABLE 1**

| Polystyrene | 1 | 2 | 3 | 4 | 5 |
|---|---|---|---|---|---|
| Weight average molecular weight | 1000 | 3000 | 300 | 10000 | 50000 |
| Glass transition temperature (°C) | 20 | 60 | 18 | 100 | 104 |

### EXAMPLES 1 to 4 and COMPARATIVE EXAMPLES 1 to 4

Various chemicals used in Examples and Comparative Examples are explained below.
SBR: SBR 1502 (styrene amount: 23.5 % by weight) available from JSR Corporation.
Carbon black: SHOUBLACK N110 available from SHOWA CABOT K. K (N₂SA: 143 m²/g).
Antioxidant: NOCRAC 6C (N-(1,3-dimethylbutyl)-N'-phenyl-p-phenylenediamine) available from OUCHISHINKO CHEMICAL INDUSTRIAL CO., LTD.
Stearic acid: Stearic acid available from NOF Corporation.
Zinc oxide: Zinc Oxide No. 1 available from Mitsui Mining And Smelting Co., Ltd.
Sulfur: Sulfur Powder available from Tsurumi Chemical Industry Co., Ltd.
Vulcanization accelerator: NOCCELER NS available from OUCHISHINKO CHEMICAL INDUSTRIAL CO., LTD.

The chemicals were compounded by kneading according to the composition prescription shown in Table 2 to obtain various sample rubber compositions. These compounds were vulcanized by press at 170°C for 20 minutes to obtain cured articles (rubber test pieces), and those were tested for a respective property shown below.

### (Grip performance)

Grip evaluation was evaluated by using Flat Belt Friction Tester (FR5010 Series) made by Ueshima Seisakusyo Co., Ltd. Columnar rubber test pieces having a width of 20 mm and a diameter of 100 mm were used. The slip ratio of the sample against a road surface at a speed of 20 km/h, a loading of 4 kgf, an outdoor temperature of 30°C and a water temperature of 25°C was changed to 0 to 70 %, and the maximum value among friction coefficients detected at that time was read and shown by index, regarding Comparative Example as 100.

### (Abrasion resistance)

For evaluation of abrasion resistance, Lambourn abrasion quantities of the rubber test pieces were measured under conditions of a temperature of 20°C, a slip ratio of 20 % and a test time of 5 minutes by a Lambourn Abrasion Tester made by Ueshima Seisakusyo Co., Ltd., the volume loss of each composition was calculated, and the evaluation of abrasion was shown by index, regarding the loss quantity of Comparative Example 1 as 100. The larger the index is, the more excellent abrasion resistance is.

### (Steering stability)

Tires with a size of 215/45R17 having a tread comprising the rubber composition of the composition content described in Table 2 were prepared. In-vehicle running was carried out on a test course, which is on a surface of an asphalt road, by using this tire. A test driver evaluated stability of control at steering at that time, according to the maximum point 5. It shows that the larger the figure is, the better the steering stability is (5: good, 4: slightly good, 3: usual, 2: slightly bad, 1: bad).

Measurement results are shown respectively in Table 2.

**TABLE 2**

| | Ex. | | | | Com. Ex. | | | |
|---|---|---|---|---|---|---|---|---|
| | 1 | 2 | 3 | 4 | 1 | 2 | 3 | 4 |
| Composition (parts by weight) | | | | | | | | |
| SBR | 100 | 100 | 100 | 100 | 100 | 100 | 100 | 100 |
| Carbon black | 40 | 40 | 40 | 40 | 40 | 40 | 40 | 40 |
| Polystyrene 1 | 10 | 30 | - | - | - | 3 | - | - |
| Polystyrene 2 | - | - | 10 | - | - | - | - | - |
| Polystyrene 3 | - | - | - | - | - | - | - | 10 |
| Polystyrene 4 | - | - | - | 10 | - | - | - | - |
| Polystyrene 5 | - | - | - | - | - | - | 10 | - |
| Antioxidant | 1 | 1 | 1 | 1 | 1 | 1 | 1 | 1 |
| Stearic acid | 2 | 2 | 2 | 2 | 2 | 2 | 2 | 2 |
| Zinc oxide | 2 | 2 | 2 | 2 | 2 | 2 | 2 | 2 |
| Sulfur | 1.5 | 1.5 | 1.5 | 1.5 | 1.7 | 1.5 | 1.5 | 1.5 |
| Vulcanization accelerator | 1.5 | 1.5 | 1.5 | 1.5 | 1.5 | 1.5 | 1.5 | 1.5 |
| Evaluation results | | | | | | | | |
| Grip performance | 107 | 110 | 105 | 103 | 100 | 100 | 96 | 112 |
| Abrasion resistance | 105 | 102 | 107 | 110 | 100 | 95 | 115 | 94 |
| Steering stability | 4 | 3.5 | 3.5 | 3 | 3 | 3 | 2.5 | 3 |

According to the present invention, there can be provided a tire comprising a rubber composition improving abrasion resistance and grip performance with a high level balance by compounding a styrene - butadiene rubber and polystyrene having particular molecular weight.

## Claims

1. A tire comprising a rubber composition comprising 5 to 150 parts by weight of polystyrene having a weight average molecular weight of 500 to 10,000 based on 100 parts by weight of a styrene-butadiene rubber.

## Patentansprüche

1. Reifen enthaltend eine Gummizusammensetzung, welche 5 bis 150 Gewichtsteile Polystyrol mit einem gewichtsgemittelten Molekulargewicht von 500 bis 10.000 bezogen auf 100 Gewichtsteile eines Styrol-Butadien-Kautschuks enthält.

## Revendications

1. Pneu comprenant une composition de caoutchouc comprenant 5 à 150 parties en poids de poly(styrène) ayant une masse moléculaire moyenne en masse de 500 à 10 000 sur la base de 100 parties en poids d'un caoutchouc de styrène-butadiène.
